# EUROPÄISCHE PATENTSCHRIFT

(11) **EP 1 733 602 B1**
(45) Veröffentlichungstag und Bekanntmachung des Hinweises auf die Patenterteilung: **08.08.2012**
(21) Anmeldenummer: 06012483.1
(22) Anmeldetag: 16.06.2006
(51) Int. Cl.: A01B 63/108

(54) **Kupplungseinrichtung für an Landfahrzeuge anbaubare Arbeitsgeräte**
Coupling device for tools attachable to a land vehicle
Dispositif d'accouplement pour des outils attachables à un véhicule terrestre

(30) Priorität: 18.06.2005 DE 202005009676 U
(43) Veröffentlichungstag der Anmeldung: 20.12.2006
(73) Patentinhaber: Heimann, Norbert, 09544 Neuhausen (DE)
(72) Erfinder: Heimann, Norbert, 09544 Neuhausen (DE)
(74) Vertreter: Thomas, Matthias

(56) Entgegenhaltungen:
- EP-A- 0 440 114
- DE-A1- 4 138 483
- FR-A- 2 123 273
- US-A- 2 427 301
- US-A1- 2003 221 399

## Beschreibung

Die Erfindung betrifft Kupplungseinrichtungen für an Landfahrzeuge anbaubare Arbeitsgeräte, vorzugsweise für frontseitig anbaubare Arbeitsgeräte, wie beispielsweise Schneeräumgeräte, Reinigungsgeräte und dergleichen. Die Erfindung betrifft ebenso Kupplungseinrichtungen für heckseitig an Landfahrzeuge anbaubare Arbeitsgeräte, sofern zwischen der Fahrtrichtung zu Transportzwecken und der Arbeitsrichtung des Landfahrzeuges eine Richtungsumkehr erfolgt.

Es ist bekannt, Arbeitsgeräte frontseitig an Landfahrzeuge (nachfolgend: Fahrzeuge) anzubauen, wobei die gewöhnliche Arbeitsrichtung mit der Fahrtrichtung des Fahrzeuges identisch ist. Typische Anwendungsfälle für derartige Arbeitsgeräte sind Schneepflüge, Schneefräsen, Räumbohlen, Mähwerke, Kehr-, Reinigungsgeräte und dergleichen, die bei der Erfüllung ihrer Arbeitsaufgabe Fahrbahnkontakt haben oder mit Bereichen neben der Fahrbahn in Kontakt stehen.

Die gewöhnliche Befestigungsart solcher Arbeitsgeräte besteht in einer frontseitig festen Montageplatte am Fahrzeug, an die eine Kupplungsplatte des Arbeitsgerätes angeschlossen wird, *wie in* US 2003/0221399 A1 *gezeigt.* Das Arbeitsgerät steht dann über ein Koppelgetriebe mit der Kupplungsplatte in Verbindung. Die bekannten Kupplungseinrichtungen verwenden dabei ein Koppelgetriebe mit annähernd gleich langen Kurbelschwingen, die über ein Koppelelement, das auch das Arbeitsgerät selbst sein kann, an ihren Gelenkpunkten verbunden sind. Auf diese Weise entsteht ein Parallelogramm, durch das ein Anheben oder Absenken des Arbeitsgerätes möglich wird.

Die oben beschriebene Kupplungseinrichtung hat wesentliche Nachteile. Um eine große Hubhöhe zu erreichen, müssen die Kurbelschwingen entsprechend lang ausgeführt sein. Damit vergrößem sich jedoch der Abstand des Arbeitsgerätes zur Frontseite des Fahrzeuges und damit auch der Überhang gegenüber der Vorderachse. Je nach Ausführungsform des Arbeitsgerätes hat dieses eine große Eigenmasse, wodurch die Hinterachse des Fahrzeuges entlastet wird. Ergeben sich aus der Arbeitsweise der Arbeitsgeräte Querkräfte, resultieren daraus Drehmomente, die zu instabilem Verhalten des Fahrzeuges führen. So ist bekannt, dass beispielsweise Schneepflüge mit Leitplanken kollidieren und die beteiligten Elemente beschädigt werden. Es hat sich gezeigt, dass solche Ereignisse bei Fahrzeugen mit geringer Eigenmasse und/oder kurzem Radstand sowie bei größerem Überhang verstärkt auftreten. Die insgesamt unbefriedigenden Verstellmöglichkeiten wirken sich dadurch nachteilig aus, dass die Arbeitsgeräte zur Erfüllung der gestellten Aufgabe größer ausgeführt werden müssen, wodurch wiederum deren Eigenmasse ansteigt.

Ist der Abstand zwischen Arbeitsgerät und Fahrzeug groß, verschlechtern sich auch die Sichtbedingungen für das Bedienpersonal. Durch das Fahrzeug vorgegebene Sichtfelder werden bei ungünstiger Anordnung der Arbeitsgeräte zusätzlich beschränkt. Dies gilt insbesondere bei ausladenden Schneepflügen. Bei einigen Arbeitsgeräten, wie beispielsweise Schneepflügen, Mähwerken oder Reinigungsgeräten kann es wünschenswert sein, den seitlichen Anstellwinkel zu variieren. Diese Aufgabe wird durch die zusätzliche Anordnung einer Schwenkeinrichtung gelöst. Da diese wiederum zwischen Fahrzeug und Arbeitsgerät angeordnet werden muss, vergrößert sich der Abstand zur Frontseite des Fahrzeuges bzw. der Überhang zur Vorderachse nochmals.

Es ist auch bekannt, Fahrzeuge mit einer als Kraftheber bezeichneten Anordnung auszuführen, wobei diese front- oder heckseitig angeordnet sein kann. Auch bei Verwendung eines Krafthebers, insbesondere in Verbindung mit einer zusätzlichen Schwenkeinrichtung, ist ein größerer Abstand zur Vorderkante des Fahrzeuges bzw. ein größerer Überhang gegenüber der Vorderachse notwendig.

*Bekannt sind Geradführungen zum Ausführen der Hebefunktion, wie beispielsweise gemäß* US 2,427,301 *oder* DE 41 38 483 A 1*. Oder solche nach* FR 2 123 273 A *beziehungsweise* EP 0 440 114 A2 *mit einem formschlüssigen Kupplungsbauteil. Solche Lösungen sind auf die Ausführung einer linearen Hubbewegung des Arbeitsgerätes beschränkt und haben die oben beschriebenen Nachteile ebenfalls.*

Es ist deshalb Aufgabe der Erfindung, eine Kupplungseinrichtung zu schaffen, die gegenüber den oben beschriebenen Kupplungseinrichtungen eine geringere Ausladung hat, deren Höhenverstellbarkeit wenigstens die Werte bekannter Einrichtungen erreicht, die eine Kombination mit verschiedenen Arbeitsgeräten zulässt und darüber hinaus einfach und kostengünstig herstellbar ist, ohne die oben geschilderten Nachteile des Standes der Technik zu haben.

Das Wesen der Erfindung ergibt sich aus den Merkmalen der Schutzansprüche, der Beschreibung und den Ausführungsbeispielen. Ausführungsbeispiele und Zeichnungen geben dabei am Anmeldetag bevorzugte Ausführungsformen wieder und beschränken die Erfindung nicht.

Erfindungsgemäß wird die Aufgabe durch eine Kupplungseinrichtung für frontseitig an Fahrzeuge anbaubare Arbeitsgeräte nach dem Oberbegriff des Schutzanspruches 1 in Verbindung mit dessen kennzeichnenden Merkmalen gelöst. Die Unteransprüche beschreiben vorteilhafte Ausgestaltungen der erfindungsgemäßen Verbindung.

Nach der Erfindung wird davon ausgegangen, dass die aufgrund ihrer Baugröße nachteiligen Koppelgetriebe durch eine nah an der Fahrzeugvorderkante angeordnete Hubeinrichtung mit zwangsgeführten Elementen ersetzt wird. Deren Bautiefe ist erheblich geringer als bei den Lösungen aus dem Stand der Technik. Dabei ist freigestellt, ob diese Kupplungseinrichtung mit dem Fahrzeugrahmen fest verbunden ist, durch eine fahrzeugeigene Montageplatte, z. B. die so genannte DIN-Platte, oder eine vergleichbare Anschlussform verbunden ist.
Die Hubeinrichtung verwendet ein Koppelelement, das im Wesentlichen auf und ab bewegt wird und im Bereich seines oberen und unteren Endes geführt ist. Die Führung erfolgt mit Hilfe geeigneter Elemente in wenigstens einer Führung. Die Führungen können den Hubweg begrenzen.
Dabei die Führungsaufgabe durch eine einzelne Führung oder eine Mehrzahl derselben übernommen werden. Bevorzugt werden Anordnungen mit zwei nebeneinander, drei in Dreiecksanordnung oder vier neben- und übereinander angeordneten Führungen.
Der Hub des Koppelelements erfolgt über eine Betätigungseinrichtung, vorzugsweise mit Hilfe eines Arbeitszylinders, der beispielsweise über die bordeigene Hydraulik- oder Pneumatikanlage bewegt werden kann. Ebenso ist eine Betätigung von Hand oder elektromechanisch ausführbar.
Das Koppelelement trägt Anschlussbauteile, durch die das zu befestigende Arbeitsgerät angeschlossen werden kann.
Es ist möglich, die Hubeinrichtung ohne zwischengeschaltete Montageplatte direkt am Fahrzeugrahmen zu befestigen. Dabei kann sie auch an Stelle eines Frontkrafthebers verwendet werden.
Es ist möglich, am Koppelelement zusätzlich eine Schwenkeinrichtung vorzusehen, die es ermöglicht, anzuschließende Arbeitsgeräte gegenüber der Fahrtrichtung des Fahrzeuges zu verschwenken und/oder zu verdrehen.
Eine Ausführungsform der Kupplungseinrichtung kann darin bestehen, dass an die Kupplungsplatte Führungselemente angebaut sind, mit denen das Koppelelement in Verbindung steht. Die Führungselemente können säulenförmige Bauteile, Nuten, Profile, Durchbrüche oder dergleichen sein. Je nach Erfordernis können diese oder die dazu korrespondierenden Bauteile entweder an der Kupplungsplatte oder am Koppelelement angeordnet sein. In jedem Fall ist jedoch eine Anordnung gewählt, bei der das Koppelelement bestimmungsgemäß geführt ist.
Die allgemein bevorzugte Ausführungsform der Kupplungseinrichtung besteht in einer Kupplungsplatte, auf der beidseitig der Mittellinie Platten angeordnet sind, die Langlöcher haben. In die Langlöcher greifen Führungsbauteile des Koppelelements, vorzugsweise Gleitbuchsen, Gleitsteine oder auf Achsen geführte Rollen, ein, sodass eine Linearbewegung des Koppelelements entsprechend der Länge der Langlöcher möglich ist.
Bei einer anderen Ausführungsform werden in jedem plattenförmigen Bauteil zwei übereinander angeordnete Langlöcher ausgeführt. Dies ermöglicht es, die oberen bzw. unteren Führungsbauteile weiter voneinander entfernt anzuordnen, das Koppelelement zu verlängern und somit die auf die Bauteile wirkenden Kräfte und Momente zu reduzieren. Die Möglichkeiten zur Streckung des Koppelelements sind letztlich durch das Sichtfeld des Fahrers und die notwendige Bodenfreiheit begrenzt.
Die in den plattenförmigen Bauteilen eingebrachten Langlöcher verlaufen in einer weiteren Ausführungsform nicht linear. Ebenso können sie eine Bogenform haben, die das Koppelelement beim Hubvorgang zusätzlich eine Kippbewegung ausführen lässt. Damit kann ein bei bestimmten angeschlossenen Arbeitsgeräten erwünschter Kippeffekt ebenso erreicht werden, wie das Einhalten einer notwendigen Arbeitsstellung, wenn die baulichen Verhältnisse bei ausgehobenem Arbeitsgerät eine Lageänderung notwendig machen.
Eine weitere bevorzugte Ausführungsform der Kupplungseinrichtung besitzt ein geteiltes Koppelelement, das eine gesonderte Einstellung des Neigungswinkels der Gerätekupplung ermöglicht. Damit kann beispielsweise beim Einsatz von Schneepflügen eine Nachjustierung des Scharanstellwinkels vorgenommen werden. Eine mögliche Ausführungsform der Teilung kann in der Ausführung zweier aneinander liegender Flansche liegen, wobei ein Flansch mit Lochraster oder Langlöchern, der gegenüber Liegende mit Bohrungen oder Lochraster ausgeführt ist und beide miteinander verschraubt werden können. Die beim Justieren eintretenden Winkelbewegungen des Koppelelementes werden über dessen Führungsbauteile ausgeglichen. Ebenso kann eine stufenlos arbeitende Verstelleinrichtung mit Handantrieb oder maschinengetriebener Stelleinrichtung vorgesehen sein.
Die oben beschriebenen Anordnungen lassen es zu, an die Gerätekupplung eine Schwenk- und/oder Dreheinrichtung zusätzlich anzubauen, die es ermöglicht, notwendige Einstellungen der Arbeitsgeräte vorzunehmen. Die dabei mögliche Optimierung der Arbeitsbedingungen für die Arbeitsgeräte ermöglicht auch deren Effizienzsteigerung.

Die Erfindung hat also den Vorteil, dass bei ihrer Anwendung der notwendige Überhang gegenüber der Vorderachse im Vergleich zum Stand der Technik verkürzt werden kann, dadurch bei wenigstens gleicher Wirksamkeit der Arbeitsgeräte eine größere Richtungsstabilität und besseres Fahrverhalten des Fahrzeuges erreicht wird und im Übrigen eine Kupplungseinrichtung verwendet wird, die nicht aufwendiger herzustellen ist, als die bekannten. Weiterhin werden die Sichtverhältnisse erheblich verbessert und unvermeidliche tote Winkel minimiert.

Die Erfindung wird nachstehend anhand von Ausführungsbeispielen näher erläutert. Dabei zeigen:
- Fig. 1 ―: die grundsätzliche Anordnung der erfindungsgemäßen Kupplungseinrichtungen am Beispiel des frontseitigen Anbaus eines Schneepfluges;
- Fig. 2 ―: die schematische Darstellung einer Kupplungseinrichtung mit ausschließlich linearer Führung in der Seitenansicht;
- Fig. 3 ―: die gleiche Kupplungseinrichtung in der Draufsicht;

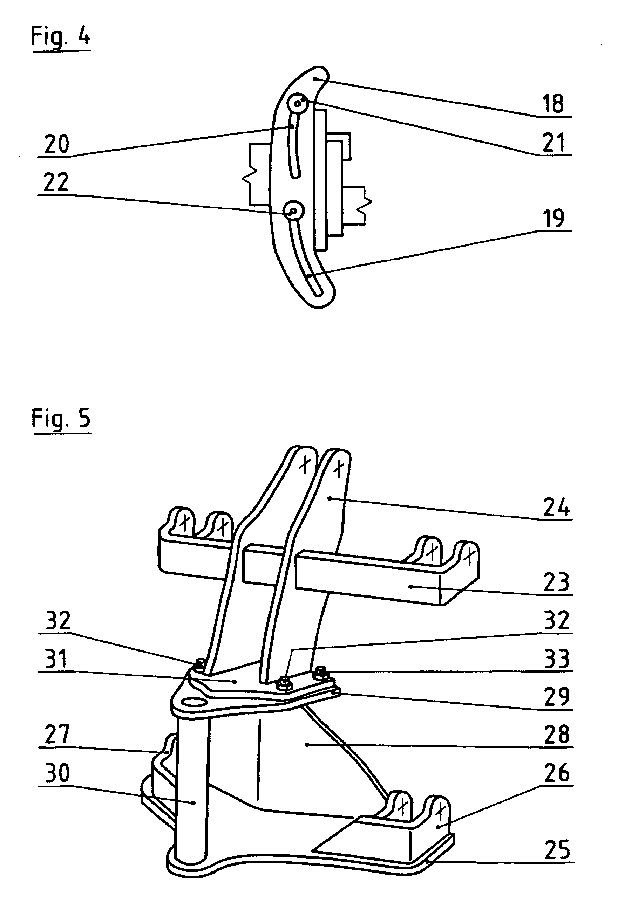

- Fig. 4 ―: die schematische Darstellung einer Kupplungseinrichtung mit einer bogenförmig geführten Hubeinrichtung;
- Fig. 5 ―: die Ausführung eines Koppelelements mit Teilung.

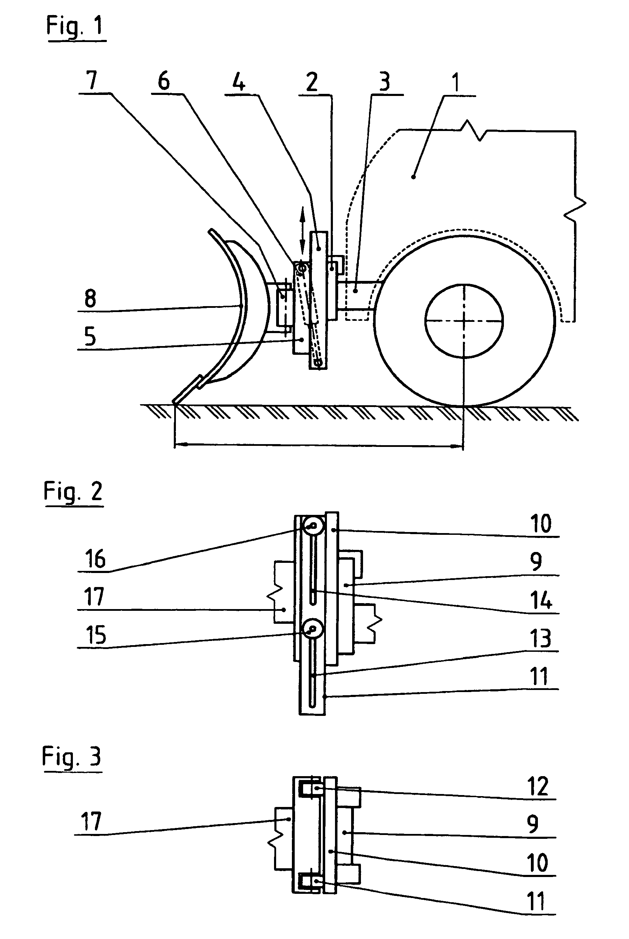

An einem Trägerfahrzeug (1) ist frontseitig eine Montageplatte (2) mit den Rahmenträgern (3) des Trägerfahrzeuges (1) fest verbunden. An der Montageplatte (2) ist eine Kupplungsplatte (4) befestigt. Die Kupplungsplatte (4) trägt in Fig. 1 nicht dargestellte Führungselemente, wobei diese als Säulen-, Nuten-, Kulissenführung oder dergleichen ausgeführt sein kann. Ein Koppelelement (5) ist durch ein Betätigungsorgan, in Fig. 1 ein hydraulischer Arbeitszylinder (6), wenigstens in der Y-Achse bewegbar. Die Art der Bewegung wird durch die Führung vorgegeben.
Das Koppelelement (5) trägt eine Aufnahme (7), die den Anschluss zu einem Räumschild (8) herstellt. Weitere stabilisierende Elemente, wie beispielsweise zusätzliche Streben zwischen Räumschild (8) und Koppelelement (5), sind anordenbar, wurden jedoch aus Darstellungsgründen in Fig. 1 fortgelassen.

Eine mögliche Ausführungsform der Kupplungseinrichtung zeigt in Fig. 2 eine Montageplatte (9), an die auf die übliche Weise eine Kupplungsplatte (10) angebaut und befestigt ist. Rechtwinklig zur Kupplungsplatte (10) sind beabstandet zueinander die Führungsteile (11) und (12) angeordnet. In den Führungsteilen (11) und (12) sind wiederum Langlöcher (13) und (14) eingearbeitet, die Führungselemente (15) und (16) aufnehmen. Die Langlöcher (13) und (14) sind geradlinig ausgeführt und liegen übereinander, sodass das Koppelelement (17) in Y-Richtung linear bewegt werden kann. Auf diese Weise ist eine Kupplungseinrichtung zu erhalten, die eine geringe Tiefe hat und geeignet ist, den Abstand zwischen Vorderachse des Fahrzeuges und Kontaktpunkt des Arbeitsgerätes mit der Bodenfläche entsprechend zu verkürzen.

Eine weitere Möglichkeit der Ausführung einer Kupplungseinrichtung verwendet ebenfalls die oben beschriebene Bauweise, wobei in den Führungselementen (18) bogenförmige Langlöcher (19) und (20) eingebracht sind. Oberer (21) und unterer Führungspunkt (22) des Koppelelements führen während der Hubbewegung jeweils zusätzlich eine Winkelbewegung aus, wobei diese von der Form der Langlöcher (19) und (20) sowie deren Lage zueinander abhängig ist. Damit kann eine Hubbewegung erreicht werden, bei der das Arbeitsgerät zusätzlich zur Hubbewegung eine Winkelbewegung erfährt, wie dies beispielsweise bei Räumschilden und Schneepflügen wünschenswert ist. So kann beispielsweise erreicht werden, dass die Oberkante eines Räumschildes zum Fahrzeug hin geschwenkt wird und sich bei angehobener Stellung des Räumschildes ein verbesserter Sichtwinkel ergibt.

Insbesondere beim Einsatz mit Räumschilden kann es wünschenswert sein, den Eingriffswinkel des Räumschildes an der Unterkante desselben zu verstellen, um je nach Einsatzbedingungen einen größeren, energieaufwendigeren oder einen kleineren, eher einen Schneideffekt bewirkenden Anstellwinkel zu erreichen.
Hierzu wird ein geteiltes Koppelelement verwendet, das beim oberen Teil im Wesentlichen aus einem quer angeordneten Träger (23), der die Führungsbauteile aufnimmt und dem vertikal angeordneten Abschnitt (24) des Koppelelementes besteht. Im unteren Bereich besteht das Koppelelement vorzugsweise aus einer horizontal liegenden Platte (25), die beidseitig Führungsbauteile (26) und (27) trägt. Eine auf der Platte (25) senkrecht stehende Platte (28) trägt als oberen Abschluss wiederum eine horizontale Platte (29). Die horizontal angeordneten Platten (25) und (29) sind nach vorn verlängert und durch die Aufnahme (30) für das Arbeitsgerät miteinander verbunden. Zwischen dem oberen und dem unteren Teil des Koppelelements ist eine Teilungsebene vorgesehen, die durch die horizontal liegende Platte (29) des unteren Teils und eine ebenso horizontal liegende Platte (31) des oberen Teils des Koppelelements gebildet wird. Beide sind durch vordere (32) und hintere Schraubverbindungen (33) miteinander verbunden, wobei eine der Platten (25) oder (29) jeweils Bohrungen oder ein Lochraster und die andere ein Lochraster oder Langlöcher besitzt. Dies ermöglicht es, mit Hilfe der Langlöcher eine Einstellung der Lage des Aufnahmeteils um einen bestimmten Betrag aus der Normallage der Aufnahme (30) zu erreichen.

### Bezugszeichenliste

- 1: Trägerfahrzeug
- 2: Montageplatte
- 3: Rahmenträger
- 4: Kupplungsplatte
- 5: Koppelelement
- 6: Arbeitszylinder
- 7: Aufnahme
- 8: Räumschild
- 9: Montageplatte
- 10: Kupplungsplatte
- 11: Führungsteil
- 12: Führungsteil
- 13: Langloch
- 14: Langloch
- 15: Führungselement
- 16: Führungselement
- 17: Koppelelement
- 18: Führungselement
- 19: Langloch
- 20: Langloch
- 21: oberer Führungspunkt
- 22: unterer Führungspunkt
- 23: Träger
- 24: vertikal angeordneter Abschnitt
- 25: horizontale Platte
- 26: Führungsbauteil
- 27: Führungsbauteil
- 28: senkrechte Platte
- 29: horizontale Platte
- 30: Aufnahme
- 31: horizontale Platte
- 32: vordere Schraubverbindung
- 33: hintere Schraubverbindung

## Patentansprüche

1. Kupplungseinrichtung für an Landfahrzeuge anbaubare Arbeitsgeräte, vorzugsweise für frontseitig anbaubare Räum- und/oder Mäh- und/oder Kehr-und/oder Reinigungsgeräte, enthaltend
eine am Fahrzeug angeordnete Montagemöglichkeit,
eine geräteseitig angeordnete Kupplungsplatte (4), die mit dem Fahrzeug verbindbar ist,
eine Hubeinrichtung,
die zwischen Kupplungsplatte (4) und Arbeitsgerät angeordnet ist,
die ein erstes (11) und ein zweites (12) Führungsteil hat, die beabstandet nebeneinander angeordnet sind,
die mit einem Betätigungsorgan eine begrenzte Hebe- oder Senkbewegung ausführen kann,
wobei die Hubeinrichtung ohne zwischengeschaltete Kurbelschwingen ein Koppelelement (5) bewegt,
das Koppelelement (5) im Bereich seines oberen und unteren Endes mit dem Führungsteil (11, 12) in Verbindung steht
und an demselben eine Aufnahme für ein Arbeitsgerät angeordnet ist.
wobei
die Hubeinrichtung an einem vertikal angeordneten Abschnitt (24) ein drittes Führungsteil hat und dieses über dem ersten und zweiten Führungsteil (11, 12) angeordnet ist.

2. Kupplungseinrichtung nach Anspruch 1,
**dadurch gekennzeichnet, dass**
die Hubeinrichtung ein viertes Führungsteil hat, das beabstandet zum dritten Führungsteil und dessen vertikal angeordnetem Abschnitt (24) angeordnet ist.

3. Kupplungseinrichtung nach einem der Ansprüche 1 oder 2,
**dadurch gekennzeichnet, dass**
erstes und/oder zweites und/oder drittes und/oder viertes Führungsteil das Koppelelement (5) durch säulenförmige Bauteile und/oder Nuten und/oder Durchbrüche und/oder Langlöcher (13, 14, 19, 20) führt.

4. Kupplungseinrichtung nach einem der Ansprüche 1 bis 3,
**dadurch gekennzeichnet, dass**
die Führungsbauteile (26, 27) das Koppelelement (5) in Langlöchern (13, 14, 19, 20) mit kurvenförmigem Verlauf führen.

5. Kupplungseinrichtung nach Anspruch 4,
**dadurch gekennzeichnet, dass**
obere und untere Führungsbauteile (26, 27) des Koppelelements (17) in nicht linear geformten Langlöchern (19, 20) geführt sind und die Langlöcher (19, 20) keinen gemeinsamen Krümmungsmittelpunkt haben.

6. Kupplungseinrichtung nach einem der Ansprüche 1 bis 5,
**dadurch gekennzeichnet, dass**
das Koppelelement (5, 17) in etwa mittig geteilt ist und im Bereich der Teilung eine Verstellmöglichkeit angeordnet ist.

7. Kupplungseinrichtung nach Anspruch 6,
**dadurch gekennzeichnet, dass**
die Verstellmöglichkeit eine Flanschverbindung mit Langlöchern (19, 20) und/oder Lochraster in einem und Bohrungen und/oder Lochraster im gegenüberliegenden Flansch ist.

## Claims

1. A coupling device for working equipment attachable to land vehicles, preferably for clearing and/or mowing and/or sweeping and/or cleaning equipment attachable on the front side, containing
a possibility for mounting arranged on the vehicle,
a coupling plate (4), arranged on the equipment side, which is connectable with the vehicle,
a lifting device,
which is arranged between the coupling plate (4) and the working equipment,
which has a first (11) and a second (12) guide part, which are arranged spaced apart adjacent to one another,
which by an actuating member can execute a limited lifting or lowering movement,
wherein the lifting device moves a coupling element (5) without interposed crank rocker mechanisms,
the coupling element (5) is connected in the region of its upper and lower end with the guide part (11, 12)
and a mount for an item of working equipment is arranged thereon
wherein
on a vertically arranged section (24) the lifting device has a third guide part and the latter is arranged over the first and second guide part (11, 12).

2. The coupling device according to Claim 1,
**characterized in that**
the lifting device has a fourth guide part, which is arranged spaced apart from the third guide part and its vertically arranged section (24).

3. The coupling device according to one of Claims 1 or 2,
**characterized in that**
first and/or second and/or third and/or fourth guide part guides the coupling element (5) through column-shaped components and/or grooves and/or apertures and/or elongated holes (13, 14, 19, 20).

4. The coupling device according to one of Claims 1 to 3,
**characterized in that**
the guide components (26, 27) guide the coupling element (5) in elongated holes (13, 14, 19, 20) with a curved course.

5. The coupling device according to Claim 4,
**characterized in that**
upper and lower guide components (26, 27) of the coupling element (17) are guided in non-linearly shaped elongated holes (19, 20) and the elongated holes (19, 20) have no common centre of curvature.

6. The coupling device according to one of Claims 1 to 5,
**characterized in that**
the coupling element (5, 17) is divided approximately centrally and a possibility for adjustment is arranged in the region of the division.

7. The coupling device according to Claim 6,
**characterized in that**
the possibility for adjustment is a flange connection with elongated holes (19, 20) and/or hole grid in one and bores and/or hole grid in the opposite flange.

## Revendications

1. Dispositif d'accouplement pour des appareils de travail pouvant être montés sur des véhicules agricoles, de préférence pour des appareils de déblaiement et/ou de fauchage et/ou de balayage et/ou de nettoyage pouvant être montés côté avant, contenant
une possibilité de montage disposée sur le véhicule,
une plaque d'accouplement (4) disposée côté appareil, qui peut être reliée au véhicule,
un dispositif de levage,
qui est disposé entre la plaque d'accouplement (4) et l'appareil de travail, lequel a une première partie de guidage (11) et une seconde partie de guidage (12), qui sont disposées à distance l'une à côté de l'autre,
lequel peut exécuter avec un organe de commande un mouvement limité de soulèvement ou d'abaissement,
le dispositif de levage déplaçant un élément d'accouplement (5) sans mécanismes à bielle et manivelle intercalés,
l'élément d'accouplement (5) étant en liaison dans la zone de son extrémité supérieure et de son extrémité inférieure avec la partie de guidage (11, 12) et un logement pour un appareil de travail étant disposé sur le même élément d'accouplement,
le dispositif de levage ayant une troisième partie de guidage sur un tronçon (24) disposé verticalement et cette partie étant disposée au-dessus de la première et de la seconde partie de guidage (11, 12).

2. Dispositif d'accouplement selon la revendication 1,
**caractérisé en ce que**
le dispositif de levage a une quatrième partie de guidage, qui est disposée à distance de la troisième partie de guidage et de son tronçon (24) disposé verticalement.

3. Dispositif d'accouplement selon l'une des revendications 1 ou 2,
**caractérisé en ce que**
la première et/ou la seconde et/ou la troisième et/ou la quatrième partie de guidage guide l'élément d'accouplement (5) à travers des composants en forme de colonne et/ou des rainures et/ou des percements et/ou des trous oblongs (13, 14, 19, 20).

4. Dispositif d'accouplement selon l'une des revendications 1 à 3,
**caractérisé en ce que**
les composants de guidage (26, 27) guident l'élément d'accouplement (5) dans des trous oblongs (13, 14, 19, 20) avec un tracé en forme de courbe.

5. Dispositif d'accouplement selon la revendication 4,
**caractérisé en ce que**
des composants de guidage (26, 27) supérieurs et inférieurs de l'élément d'accouplement (17) sont guidés dans des trous oblongs (19, 20) formés de façon non linéaire et les trous oblongs (19, 20) n'ont pas de point central de courbure commun.

6. Dispositif d'accouplement selon l'une des revendications 1 à 5,
**caractérisé en ce que**
l'élément d'accouplement (5, 17) est divisé à peu près au centre et une possibilité de réglage est disposée dans la zone de la division.

7. Dispositif d'accouplement selon la revendication 6,
**caractérisé en ce que**
la possibilité de réglage est une liaison par bride avec des trous oblongs (19, 20) et/ou des trames perforées dans une bride et des percements et/ou des trames perforées dans la bride opposée.
